# EUROPEAN PATENT APPLICATION

(11) **EP 2 048 622 A1**
(43) Date of publication of application: **15.04.2009**
(21) Application number: 07791622.9
(22) Date of filing: 31.07.2007
(51) Int. Cl.: G06T 15/00, G06F 17/50, G06T 15/70

(54) **DEVICE AND ITS METHOD FOR DRESSING SIMULATION AND PROGRAM**

(30) Priority: 03.08.2006 JP 2006211726
(71) Applicant: Shima Seiki Manufacturing., Ltd., Wakayama-shi, Wakayama 6410003 (JP)
(72) Inventor: TAMURA, Takahiko, Wakayama-shi Wakayama 641-0003 (JP); NAKAMURA, Atsushi, Wakayama-shi Wakayama 641-0003 (JP); NAKAMURA, Toshinori, Wakayama-shi Wakayama 641-0003 (JP)
(74) Representative: Emde, Eric
(86) International application number: PCT/JP2007/064937
(87) International publication number: WO 2008/016027

(57) **Abstract**

A garment is divided into coarse polygon elements to simulate a dressing condition, and a force acting on each divided polygon element is calculated to effect deformation. When acceleration applied to each part of the garment becomes approximately 0, the polygon elements are switched to fine polygon elements to proceed with simulation. The dressing condition of the garment can be simulated realistically in a short time.

## Description

### TECHNICAL FIELD

The present invention relates to a dressing simulation of a garment using clothes, and particularly to speeding up the simulation.

### BACKGROUND ART

Simulation of a dressing condition by dressing a human body model in a garment on a design has been known. In this technology, the garment is divided into a plurality of polygon elements, and a force acting on each polygon element is obtained based on the resistance and frictional force generated when the garment comes into contact with a human body model, stress between the polygon elements, and gravitational force acting on the garment, to simulate deformation of the polygon elements. Once the garment achieves approximately-constant stable shape or when the simulation is performed a predetermined number of times, the computation of the forces acting on each polygon element is ended and dressing of the garment is started.

In this simulation, the simulation accuracy increases as the meshes are made more detailed, but in that case the computation effort increases. However, making a coarse mesh reduces the computation effort, but the simulation accuracy cannot be accomplished. In this regard, Patent Document 1 discloses a device for performing a simulation of a coarse model having less polygon elements and then changing it to detailed model with a number of polygon elements. However, in Patent Document 1, although the force acting on each polygon element is calculated and then the polygon element is deformed only once after changing the coarse model to the detailed model, further simulation is not performed. For this reason, the simulation is ended in a state in which the results of simulating the coarse model are basically kept and the original form of the coarse model is maintained.
Patent Document 1: Japanese Patent Application Publication No. 2005-11027

### DISCLOSURE OF THE INVENTION

An object of the present invention is to simulate a dressing condition of a garment in a short time with an accuracy corresponding to a model in which fine polygon elements are used.
An additional object of the present invention is to switch from a coarse polygon element to a fine polygon element at an appropriate timing.

The present invention is a device for simulating a dressing condition of a garment on a human body by dividing the garment into a plurality of polygon elements and then deforming/moving each of the polygon elements based on a force of a human body model acting on the polygon element, a force between the polygon elements, and a gravitational force, the device having:
means for dividing the garment into coarse polygon elements to simulate the dressing condition; and
means for dividing the garment again into fine polygon elements on the basis of an initial value taken as a result of the simulation with the coarse polygon elements, and simulating the dressing condition such as to repeatedly deform/move the fine polygon elements until at least a dressing condition for the division into the fine polygon elements is obtained.

Moreover, the present invention is a method for simulating a dressing condition of a garment on a human body by dividing the garment into a plurality of polygon elements and then deforming/moving each of the polygon elements based on a force of a human body model acting on the polygon element, a force between the polygon elements, and a gravitational force, the method having the steps of:
dividing the garment into coarse polygon elements to simulate the dressing condition; and
dividing the garment again into fine polygon elements on the basis of an initial value taken as a result of the simulation with the coarse polygon elements, and simulating the dressing condition such as to repeatedly deform/move the fine polygon elements until at least a dressing condition for the division into the fine polygon elements is obtained.

In addition, the present invention is a program for simulating a dressing condition of a garment on a human body by dividing the garment into a plurality of polygon elements and then deforming/moving each of the polygon elements based on a force of a human body model acting on the polygon element, a force between the polygon elements, and a gravitational force, the program having:
an instruction for dividing the garment into coarse polygon elements to simulate the dressing condition; and
an instruction for dividing the garment again into fine polygon elements on the basis of an initial value taken as a result of the simulation with the coarse polygon elements, and simulating the dressing condition such as to repeatedly deform/move the fine polygon elements until at least a dressing condition for the division into the fine polygon elements is obtained.

Preferably, the fact that the garment divided into the coarse polygon elements moves at a substantially constant speed is detected, and the coarse polygon elements are changed to the fine polygon elements at the time of the detection.

The description of the simulation device in this specification is directly applied to the simulation method and program, unless otherwise stated. Moreover, the description of the simulation method is directly applied to the simulation device and program, unless otherwise stated. In addition, although the model used in the simulation is not an actual human body but a human body model, the human body model is sometimes referred to as "human body" for convenience.

In the present invention, the first half of the simulation is performed with the coarse polygon elements, and the second half of the simulation is performed with the fine polygon elements. As a result, the time required for the simulation can be reduced and a dressing result corresponding to the fine polygon elements can be simulated so that an accurate simulation can be executed. Consequently, the design of the garment can be evaluated easily.

When the garment divided into the coarse polygon elements moves at a substantially constant speed, the acceleration applied to the garment becomes the minimum as a whole, and the garment keeps its steady state. When the simulation proceeds from this stage, the garment enters an unsteady state again. By changing the coarse polygon elements to the fine polygon elements upon detection of the constant-speed movement of the garment divided into the coarse polygon elements, the simulation using the fine polygon elements can be started after the garment brought into the substantially steady state by the simulation performed with the coarse polygon elements.

### BRIEF DESCRIPTION OF THE DRAWINGS

FIG. 1 is A block diagram of a dressing simulation device of an embodiment;
FIG. 2 is a flowchart showing a dressing simulation method of the embodiment;
FIG. 3 is a block diagram of dressing simulation program of the embodiment;
FIG. 4 is a diagram showing an example of coarse polygon elements and fine polygon elements of the embodiment;
FIG. 5 is a diagram showing another example of the coarse polygon elements and fine polygon elements of the embodiment;
FIG. 6 is a diagram showing a model of forces acting between polygon elements in the embodiment;
FIG. 7 is a diagram showing a relationship of a texture image to the fine polygon elements and the coarse polygon elements in the embodiment;
FIG. 8 is a diagram for explaining a state in which a garment divided into the coarse polygon elements moves at a substantially constant speed;
FIG. 9 shows dressing simulation results of a comparative example, wherein (A) shows the results obtained when the fine polygon elements are used, and (B) the result obtained when the coarse polygon elements are used, and wherein, starting from the left-hand side, each drawing shows division of a skirt by means of polygon elements, a dressing condition of the skirt as viewed from the front, and a dressing condition of the skirt as viewed in a flat plane; and
FIG. 10 shows dressing simulation results of the embodiment, wherein a simulation is started using the coarse polygon elements of Fig. 9(B) and then the coarse polygon elements are changed to the fine polygon elements of Fig. 9(A) to end the simulation, and wherein the left-hand side of the drawing shows a dressing condition of a skirt as viewed from the front, and the right-hand side a dressing condition of the skirt as viewed in a flat plane.

### EXPLANATION OF REFERENCE NUMERALS

- 2: Dressing simulation device
- 4: Bus
- 6: Stylus
- 7: Digitizer
- 8: Keyboard
- 10: Color monitor
- 12: Color printer
- 14: Disc driver
- 16: LAN interface
- 18: Pattern creating part
- 20: Pattern data storage
- 22: Polygon element generator
- 24: Simulator
- 26: Polygon element switching part
- 30: Simulation program
- 31: Polygon element generating instruction
- 32: Stitching instruction
- 33: Dressing instruction
- 34: Simulation instruction
- 35: Polygon element switching instruction
- 71: Texture image
- 72: Arrangement of fine polygon elements
- 73: Arrangement of coarse polygon elements
- 74: Arrangement of coarse polygon elements in three-dimensional space

### BEST MODE FOR CARRYING OUT THE INVENTION

The best mode for carrying out the present invention is now described hereinafter, but the present invention is not limited to this mode.

### Embodiment

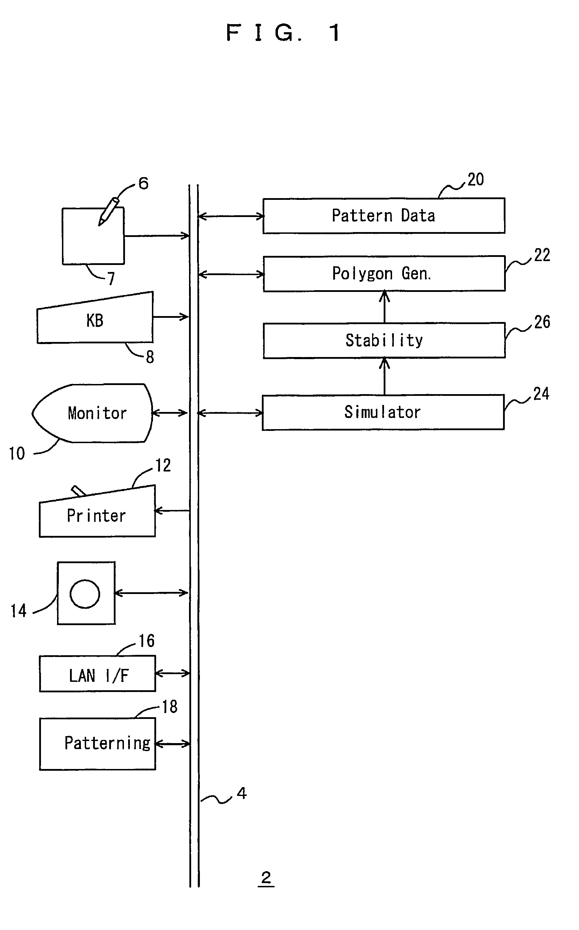

FIG. 1 to FIG. 10 each show a dressing simulation device 2, dressing simulation method, and simulation program 30 according to an embodiment. In FIG. 1, reference numeral 4 represents a bus, 6 a stylus, 7 a digitizer, 8 a keyboard for inputting instructions and the like, and 10 a color monitor. The stylus 6 is used for designing a garment, and the results of the design are displayed on the color monitor 10. The garment is designed by using the stylus 6 again to make corrections. The results of a dressing simulation are also displayed on the color monitor 10. Reference numeral 12 represents a color printer, and 14 a disc driver which is used for inputting/outputting the design results. A LAN interface 16 can also be used for inputting/outputting the design results. Reference numeral 18 represents a pattern creating part for editing the design that is input from the stylus 6, to obtain pattern data of the garment. The pattern data include not only the shape of each part of the garment, but also an ID of each part, data on a front body, rear body, collar, right front sleeve and the like as the part attributes, and the characteristics representing the position of parts of each armpit. A seam line between parts is defined from the correspondence relation between the characteristics. The garment of the present invention is a garment obtained by stitched a plurality of parts together, and is particularly a garment obtained by stitching together parts constituted by clothes.

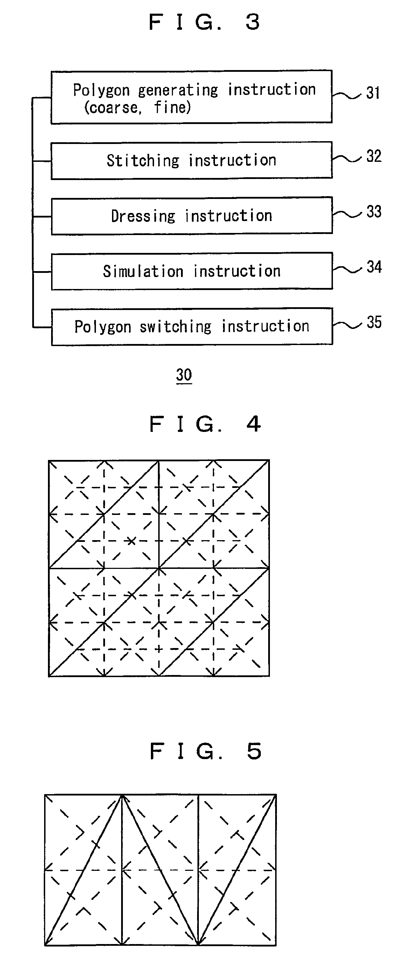

Reference numeral 20 represents a pattern data storage part for storing the pattern data as the objects of a dressing simulation, and a polygon element generator 22 divides each part of the pattern data into a plurality of polygon elements and particularly into two types of polygon elements: coarse polygon elements and fine polygon elements. As shown in the examples of the division into polygon elements in FIG. 4 and FIG. 5, each of the solid lines indicates a mesh to be divided into the coarse polygon elements, and each of the dashed lines indicates a mesh to be divided into the fine polygon elements. In the case of FIG. 4, the division lines for the division into the coarse polygon elements also serve as the division lines for the division into the fine polygon elements, and the fine polygon elements are present within a single coarse polygon element.
In the case of FIG. 5, on the other hand, sometimes a single fine polygon element extends over two coarse polygon elements, thus the division lines for the division into the coarse polygon elements are not necessarily the division lines for the division into the fine polygon elements.

A contour for defining the form of the garment, a turnback, and an internal line of a pocket borderline are significant parts especially when designing the garment. The borderline of each part does not represent the contour of the garment. Preferably, the polygon elements in contact with the contour or internal line are the fine polygon elements when only the fine polygon elements are initially allocated in positions that are in contact with the contour or internal line, to perform a simulation using the coarse polygon elements.

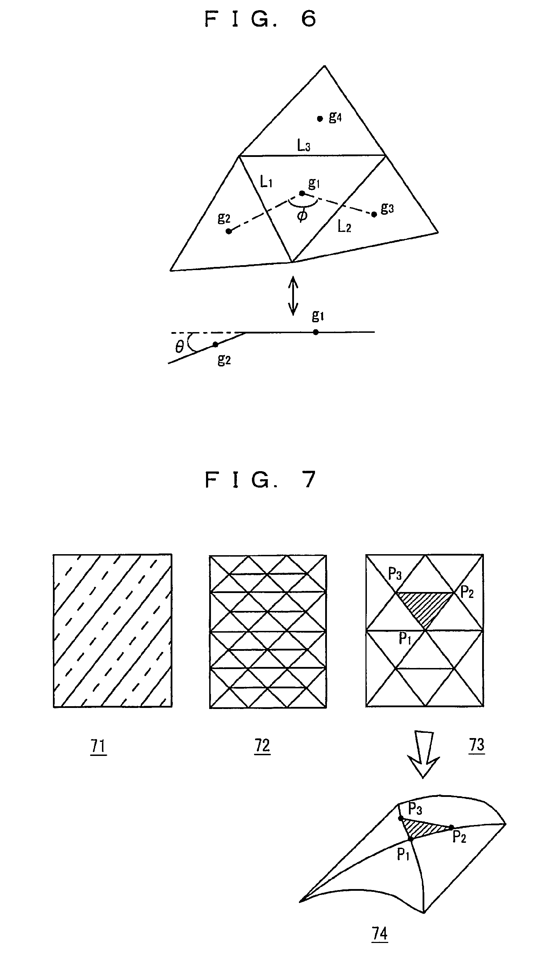

Returning to FIG. 1, reference numeral 24 represents a simulator for obtaining a force acting on each polygon element and executing a simulation by deforming and moving the polygon element. FIG. 6 shows a model of forces acting on the polygon elements. A force acting on the central polygon element of the four polygon elements shown in FIG. 6 is considered. Reference numerals g1 to g4 indicates the center of each polygon element, and the shape of the polygon element may be a triangle or square. Reference numerals L1 to L3 indicate the three sides of the central polygon element. φ <g2g1g3 is satisfied, and θ is a bent angle obtained when two polygon elements are folded with respect to the side L1.

The force acting on the central polygon element is generated from the positional relationship among the centers g2, g3, g4 of, for example, three polygon elements, how the sides L1 to L3 are changed from the pattern data, the bend angle θ between the polygon elements that are adjacent to each other with respect to the sides L1 to L3, or from how <g2g1g3 is changed from the pattern data. The force is based on how each polygon element is deformed in relation to the pattern data. The force can be considered as a spring force that is proportional to a displacement of each polygon element based on a steady shape of the polygon element in the pattern data.

In addition to this force, gravitational force also acts on the garment. Even when the gravitational force is distributed to each polygon element, the gravitational force acts directly on each polygon element. The shape of the garment is defined by interference between the garment and the human body model. Examples of this interference between the garment and the human body model include a resistance generated when the garment comes into contact with the surface of the human body model, and a frictional force generated when the garment approaches the surface of the human body model within a predetermined distance. When each polygon element makes a movement, the kinetic energy is lost due to the frictional force proportional to the speed of the movement. Adding these forces can establish a motion equation of each polygon element. By repeating the process of obtaining the acceleration from the force acting on each polygon element, deforming and moving the polygon element, and again obtaining the force acting on each polygon element, how the garment comes into contact with the human body model and changes its shape can be simulated. The acceleration of each polygon element is associated with translation and rotation of the center of each polygon element and the movement on the gravity center of each side or each apex. The movement of each side or apex of each polygon element is limited in a flat plane of the polygon element.

FIG. 7 shows a correspondence relation of a texture of the garment to the fine polygon elements and the coarse polygon elements. Reference numeral 71 represents a texture image of the garment, 72 an arrangement of fine polygon elements, and 73 an arrangement of coarse polygon elements. Suppose that the coarse polygon elements are used for simulating a dressing condition to obtain the arrangement of coarse polygon elements 74 in the three-dimensional space. Arrangements 73, 74 show the arrangements of polygon elements P1P2P3. With the polygon elements P1P2P3, it is possible to obtain where on a three-dimensional space to map each point of the polygon elements P1P2P3 of the arrangement 73, based on the known positions of the polygon elements P1P2P3 in the arrangement 74. Coordinates of any points other than the polygon elements P1P2P3 in the arrangement 73 can also be obtained when mapping the polygon elements P1P2P3 in the arrangement 74 on the three-dimensional space. Therefore, it is possible to obtain where on the three-dimensional space to map the fine polygon elements of the arrangement 72, and where on the three-dimensional space to map each pixel of the texture image 71. For example, projective transformation is used for the mapping.

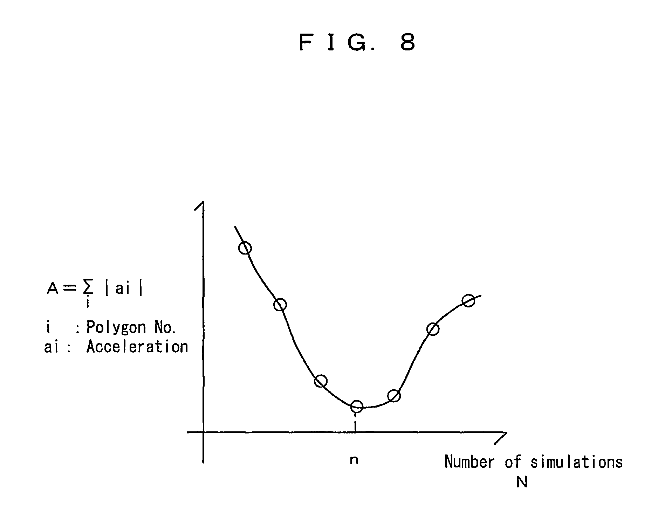

FIG. 8 shows changes of the sum of absolute values of the accelerations applied to the garment during the simulation. The motion equation of each polygon element is solved to obtain each acceleration. Here, the number of times that the motion equations are solved is taken as the number of times the simulation is performed, N, and the sum of the absolute values of the accelerations applied to the polygon elements is taken as the total acceleration A. When the total acceleration A is high the garment enters an unsteady state, and when the total acceleration A is 0 the garment enters a steady state. The minimum value of the total acceleration A is obtained by repeating the simulation, and thereafter the total acceleration A increases. The average of the absolute values of the speed of the polygon elements is taken as an average speed. The garment moves at a substantially constant speed when the simulation is performed n times where the total acceleration A becomes the minimum value, and the average speed becomes constant around this stage. The total acceleration A becomes the minimum value when the simulation is performed n times, and the coarse polygon elements are changed to the fine polygon elements in the vicinity of the point where the garment moves at a substantially constant speed. By the above process, the garment is brought to the steady state with the coarse polygon elements, and then the coarse polygon elements are converted into the fine polygon elements so that fine drape that cannot be expressed by the coarse polygon elements can be simulated.

Returning to FIG. 1, reference numeral 26 represents a polygon switching part for monitoring the changes in the total acceleration of the garment during the simulation using the coarse polygon elements, and, when the total acceleration passes through the minimum value, returning the positions or orientations of the coarse polygon elements to the position where the total acceleration becomes the minimum, to change the coarse polygon elements to the fine polygon elements. Because the positions or orientations of the coarse polygon elements are returned when the total acceleration passes through the point of the minimum value, the positions or orientations of the polygon elements that are obtained in, for example, previous two or three steps are preferably stored.

When the polygon elements are switched to the fine polygon elements, the positions of the coarse polygon elements are the position where the total acceleration is the minimum value, and the relation shown in FIG. 7 is used to determine the initial positions of the polygon elements. The speed of the coarse polygon elements may be carried over to the fine polygon elements, but in this embodiment the initial speed of the fine polygon elements is 0. Next, for the fine polygon elements, the motion equation is solved as in FIG. 6 on the basis of the positional relationship among the polygon elements, the interference between the garment and the human body model, the gravitational force acting on the garment, and the frictional force generated by the movements of the polygon elements, and then deformation or movement of each polygon element is repeatedly calculated.

The simulator 24 executes the simulation again based on the initial arrangement and initial forces of the fine polygon elements. When allocating calculation time for the simulations, the ratio between the calculation time for the simulation with the coarse polygon elements and the simulation with the fine polygon elements is, for example, about 1:1. The total calculation time is a time before the garment using the fine polygon elements reaches the steady state, which is approximately 1/2 of the time in which the simulation is performed with the fine polygon elements from the beginning, and is approximately twice the time in which the simulation is performed with the coarse polygon elements only.

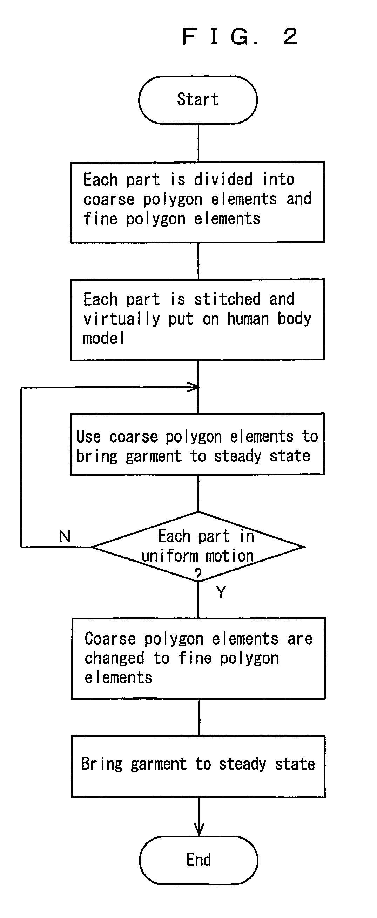

FIG. 2 shows a dressing simulation method of the embodiment. Each part of the pattern data is divided into the coarse polygon elements and fine polygon elements. Then, each part is virtually stitched in accordance with the pattern data, and virtually dressing the human body model in thus obtained garment. Due to the restriction that the parts can exist outside the human body, the garment deforms and a large distortion is generated in the beginning. The simulation is performed on the garment divided into the coarse polygon elements, until the garment reaches the steady state. Here, when the fact that each polygon elements moves at a substantially constant speed is detected, that is, when the total acceleration applied to the garment becomes the minimum, the coarse polygon elements are changed to the fine polygon elements. Then, the dressing simulation is executed until the garment enters the steady state, that is, until the total acceleration becomes a predetermined value or lower or until the simulation is performed at least a predetermined number of times.

FIG. 3 shows the simulation program 30 of the embodiment. A polygon element generating instruction 31 divides each part of the garment into the coarse polygon elements and the fine polygon elements. A stitching instruction 32 virtually stitches each part in accordance with the pattern data. A dressing instruction 33 virtually dresses the human body model in the stitched garment. A simulation instruction 34 obtains a force acting on each polygon element, solves the motion equation of the polygon, and deforms and moves the polygon. A polygon element switching instruction 35 detects that the total acceleration applied to the garment becomes the minimum, changes the coarse polygon elements to the fine polygon elements, and sends the arrangement of the fine polygon elements that is obtained from the arrangement of the coarse polygon elements to the simulation instruction 34 as an initial value of the arrangement of the fine polygon elements.

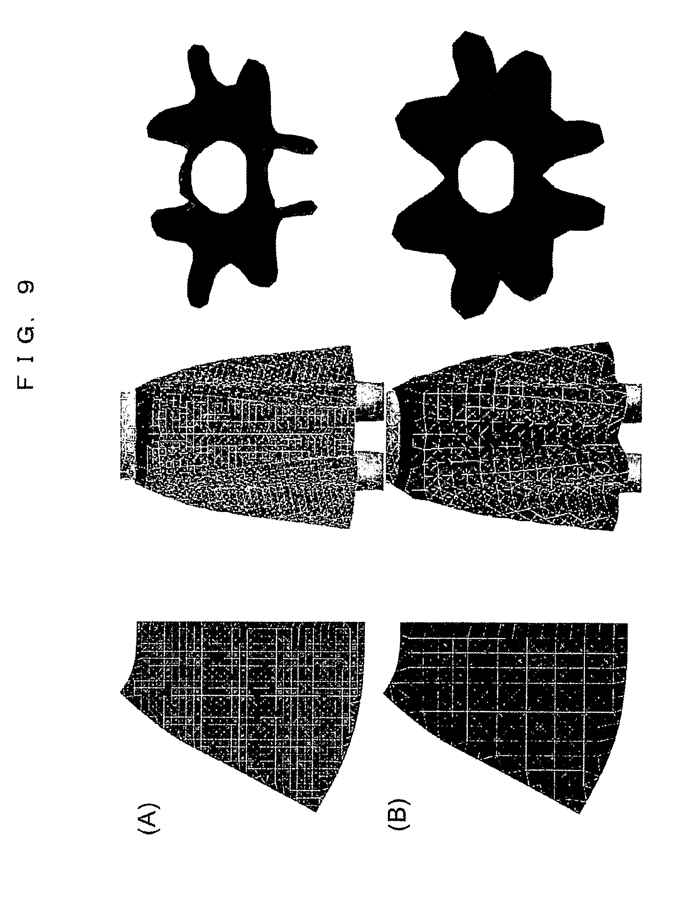

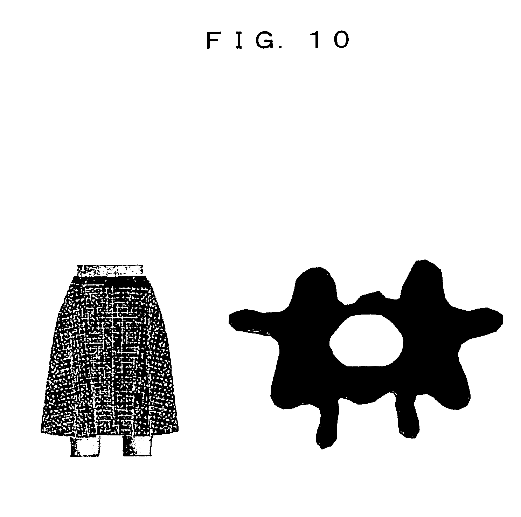

FIG. 9 and FIG. 10 show dressing simulation results of a skirt. FIG. 9(A) shows the results obtained when only the fine polygon elements are used to perform the simulation, and FIG. 9(B) the result obtained when only the coarse polygon elements are used to perform the simulation. The left-hand column of FIG. 9 shows a skirt on the pattern data, the middle column the simulation results of the skirt as viewed from the front, and the right-hand column the simulation results of the skirt as viewed in a flat plane. Even when the simulation is repeated until the garment is brought to the steady state by using the coarse polygon elements, the results of this simulation are different from the results of the simulation performed using the fine polygon elements. As is understood particularly from the right-hand column of FIG. 9, the shapes of the pleats on the skirt are different and the drape textures are not expressed.
FIG. 10 shows the results obtained when the simulation is started with the coarse polygon elements and the simulation proceeds after changing the coarse polygon elements to the fine polygon elements, according to the embodiment. Both in front and plan view, the simulation results are the same as the results of the simulation performed using the fine polygon elements from the beginning.

Although the embodiment shows dressing of the skirt, any type of garment can be used. The virtually stitched garment may be set on the human body model and expanded to the contour of the human body model, in order to virtually dress the human body model in the garment. Alternatively, a thin axis of the human body model may be run through the inside of the virtually stitched garment, the axis may be expanded to the contour of the human body model without allowing the garment to interfere with the human body model. Because the coarse simulation is performed in the process of the initial dressing including the process of expanding the axis, the garment is divided into the coarse polygon elements.

The following effects can be obtained in the embodiment.
1) The dressing condition of the garment can be simulated accurately in a short time.
2) The simulation results are so accurate that they cannot be obtained using the coarse polygon elements.
3) By performing the simulation with the coarse polygon elements and changing the coarse polygon elements to the fine polygon elements when the garment moves at a substantially constant speed, the coarse polygon elements can be changed to the fine polygon elements through the steady state to which the garment is brought by the simulation with the coarse polygon elements.

## Claims

1. A dressing simulation device (2) for simulating a dressing condition of a garment on a human body by dividing the garment into a plurality of polygon elements and then deforming/moving each of the polygon elements based on a force of a human body model acting on the polygon element, a force between the polygon elements, and a gravitational force, the dressing simulation device (2) comprising:
means for dividing the garment into coarse polygon elements to simulate the dressing condition; and
means for dividing the garment again into fine polygon elements on the basis of an initial value taken as a result of the simulation with the coarse polygon elements, and simulating the dressing condition such as to repeatedly deform/move the fine polygon elements until at least a dressing condition for the division into the fine polygon elements is obtained.

2. The dressing simulation device (2) according to claim 1, further comprising means for detecting that the garment divided into the coarse polygon elements moves at a substantially constant speed, to change the coarse polygon elements to the fine polygon elements upon detection.

3. A dressing simulation method for simulating a dressing condition of a garment on a human body by dividing the garment into a plurality of polygon elements and then deforming/moving each of the polygon elements based on a force of a human body model acting on the polygon element, a force between the polygon elements, and a gravitational force, the dressing simulation method comprising the steps of:
dividing the garment into coarse polygon elements to simulate the dressing condition; and
dividing the garment again into fine polygon elements on the basis of an initial value taken as a result of the simulation with the coarse polygon elements, and simulating the dressing condition such as to repeatedly deform/move the fine polygon elements until at least a dressing condition for the division into the fine polygon elements is obtained.

4. The dressing simulation method according to claim 3, further comprising the steps of detecting that the garment divided into the coarse polygon elements moves at a substantially constant speed, and changing the coarse polygon elements to the fine polygon elements upon detection.

5. A dressing simulation program (30) for a dressing simulation device that simulates a dressing condition of a garment on a human body by dividing the garment into a plurality of polygon elements and then deforming/moving each of the polygon elements based on a force of a human body model acting on the polygon element, a force between the polygon elements, and a gravitational force, the dressing simulation program (30) comprising:
an instruction for dividing the garment into coarse polygon elements to simulate the dressing condition; and
an instruction for dividing the garment again into fine polygon elements on the basis of an initial value taken as a result of the simulation with the coarse polygon elements, and simulating the dressing condition such as to repeatedly deform/move the fine polygon elements until at least a dressing condition for the division into the fine polygon elements is obtained.

6. The dressing simulation program (30) according to claim 5, further comprising an instruction for detecting that the garment divided into the coarse polygon elements moves at a substantially constant speed, to change the coarse polygon elements to the fine polygon elements upon detection.
